Europäisches Patentamt

European Patent Office

Office européen des brevets

(19)

(11) Publication number: **0 171 113**
A1

# (12) EUROPEAN PATENT APPLICATION

(21) Application number: **85201191.5**

(22) Date of filing: **12.07.85**

(51) Int. Cl.⁴: **B 23 K 11/36**

(30) Priority: **13.07.84 NL 8402217**

(43) Date of publication of application: **12.02.86**
**Bulletin 86/7**

(84) Designated Contracting States: **BE DE FR IT NL SE**

(71) Applicant: **Van den Enden, Eduardus C.A.G.,**
**Hoogeind 29, NL-5575 BD Luyksgestel (NL)**

(72) Inventor: **Van den Enden, Eduardus C.A.G., Hoogeind 29,**
**NL-5575 BD Luyksgestel (NL)**

(74) Representative: **Urbanus, Henricus Maria, Ir. et al, c/o**
**Vereenigde Octrooibureaux Nieuwe Parklaan 107,**
**NL-2587 BP 's-Gravenhage (NL)**

(54) **An apparatus for profiling the ends of the electrodes of a spot welding device, as well as a device for spot welding.**

(57) An apparatus for profiling the ends of the electrodes of a spot welding device, comprising cutting members (15, 16) rotatably supported in a housing for machining the end profiles of the electrodes, said cutting members (15, 16) being coupled to a drive motor (11) by means of a transmission mechanism.

ACTORUM AG

EP 0 171 113 A1

-1-

Title: An apparatus for profiling the ends of the electrodes
of a spot welding device, as well as a device for
spot welding.

The present invention relates to an apparatus for
profiling the ends of the electrodes of a spot welding
device, as well as to a device for spot welding.

Spot welding electrodes in general are copper
alloy wire connectors the ends of which have a frusto-conical
form with a profiled end face which, in the welding position,
parallels the surface of the part to be welded and which has
a profile whose form is determined by the desired current
intensity per unit area. The end face is subjected to high
pressure and temperature during spot welding, resulting in
the end of the electrode being subject to wear and
deformation, so that the quality of the weld deviates more
and more from the requirements set. Besides, material from
the parts to be spot welded may adhere to the electrodes,
which has an adverse effect on the spot welding current.
In order to maintain the required quality of the spot
weld as much as possible, it is therefore necessary to
regularly subject the ends of the electrodes to a finishing
operation (profiling).

The working life of an electrode, by which is
understood the number of welds that can be made with a properly
profiled electrode until it has been worn down to the
extent that the weld no longer meets the requirements set, depends on the surface condition of the end profile, the material to be spot welded, the spot welding pressure, the thickness of the parts to be welded together, the welding temperature and the quality requirements set. When an electrode has come to the end of its working life, it is tried by means of a file or other hand tool to profile the electrode end as well as possible. This operation takes about 6 minutes and should be carried out by experienced maintenance personnel. Nevertheless, there is no guarantee after this operation that the electrode has its optimum form and surface condition and hence no guarantee for the quality of the spot weld either.

In the case of batch production and manual operation of the spot welding tongs, welding is often continued until a maintenance mechanic is available for profiling the electrodes, thereby mostly exceeding the working life and adversely affecting the quality of the spot welds.

In the case of batch production and automatic control of the spot welding tongs, e.g. in the motor-car industry, the working life is mostly not exceeded, since the robot or like automatic machine can be set to return to an inoperative position after a predetermined number of spot welds and cannot be re-activated until a signal has been given that the electrodes have been profiled. This profiling operation, as in the case of hand operation, takes place by means of hand tools.

The robot or automatic welder as a rule is in series with other automatic machines, which means that at standstill of one of the robots in the line, the others too have to stand still. Moreover, the robots in the line do not all have the same working life, since this depends on the nature of the operation to be carried out. The result is that the production has to be interrupted repeatedly for putting any of the robots into running order again.

The present invention provides an apparatus by means of which two opposing electrodes can be profiled simultaneously and highly accurately so that a minimum amount of time is lost in putting the spot welding device into running order again and no maintenance personnel is necessary for the profiling operation.

This is achieved, according to the present invention, by providing cutting members rotatingly supported in a housing for machining the end profile of the electrodes, said cutting members being coupled to a drive motor by means of a transmission mechanism.

In the case of hand operation of the spot welding tongs, the operator moves said tongs, after each cycle or after a number of spot welds, to the stationary profiling apparatus, and causes the tongs to pinch the profiling apparatus, after which be can start a new cycle.

Naturally, it is also possible to arrange a mobile profiling apparatus and to move it to a stationary spot welding machine. A plurality of spot welding machines can then be serviced by a single profiling apparatus. It is advantageous to profile well within the normal working life, so that an optimum profile and hence an optimum spot weld is maintained with a minute amount of material being removed from the electrodes (0.03 mm or more).

When the spot weld tongs are operated automatically, the profiling apparatus is arranged in such a manner that after a given number of welds have been made, the electrode holder of the robot or automatic machine, is brought in a position wherein the ends of the electrodes are in contact with the cutting members of the profiling apparatus. During this profiling operation no more time is lost than is necessary for making a spot weld, while each robot in the line can follow its own profiling frequency without the need of bringing the line to a standstill. Each robot can have its own profiling apparatus, but it is also possible for two or more robots to use one profiling apparatus. Even in the case of automatic operation of the welding tongs, it is advantageous to profile well within the normal working life of the spot welding electrodes, since then the quality of all spot welds remains optimum.

By using the apparatus according to the present invention, the ends of the electrodes, after the profiling operation, always have the correct profile, irrespective of the position of the electrodes in the welding tongs.

-5-

Besides, no specialized maintenance personnel is required but the operation can be performed by the operator of the welding tongs or by the machine itself. The housing accommodating the cutting members preferably comprises a centring device for guiding the electrodes as these are being fed to the cutting members.

The profiling apparatus may include a switch for starting or switching off the drive motor when the electrodes are fed to, or withdrawn from, the profiling apparatus.

Furthermore, the switch may be coupled to a valve in a compressed-air line for blowing the cutting members clear after the electrodes have been profiled.

Some embodiments according to the present invention will now be described, by way of example, with reference to the accompanying drawings, in which:

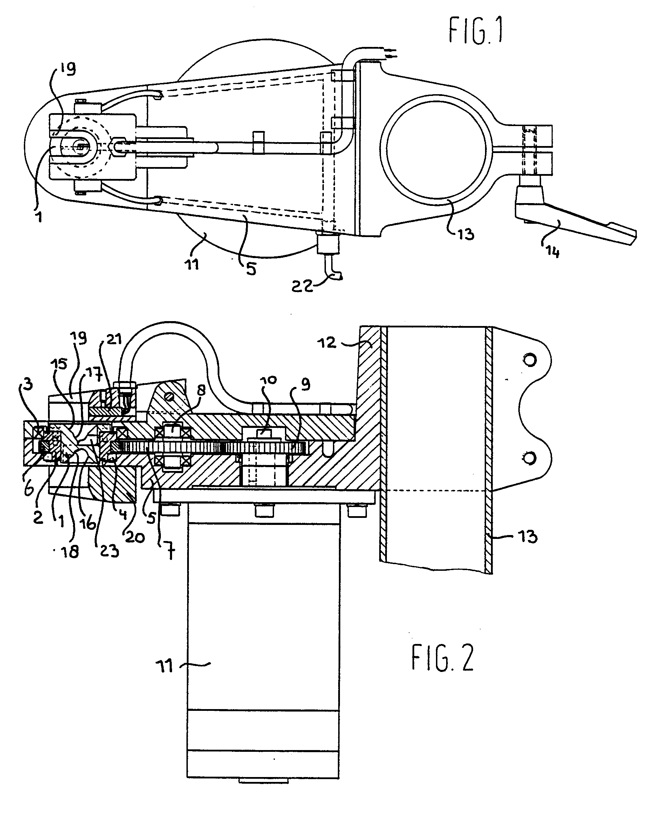

Fig. 1 is a top view of a profiling apparatus according to the present invention;

Fig. 2 is a longitudinal sectional view of said apparatus;

Fig. 3 is a cross-section of the cutting member with electrodes inserted; and

Fig. 4 is a cross-section of the cutting member with the inserted electrodes in a modified position.

A cutting member 1 is disposed in a sleeve 2 supported by roller bearings 3, 4 in a housing 5. On bush 2 there is mounted a ring gear 6 coacting with a gear 7 mounted with a shaft 8 in the housing 5. In its turn, gear 7 coacts

0171113

-6-

with a gear 9 mounted on the shaft 10 of an electric motor 11 provided underneath the housing. Housing 5 is slidably mounted with a sleeve 12 on a pillar 13 and can be secured at the desired height by means of a toggle 14.

The cutting member comprises an upper conical cutting face 15 and a corresponding lower cutting face 16. Furthermore, the profiled bottoms 17, 18 of the conical recesses are designed as cutting profile. The cutting members are made of hardened steel or hard metal. Cutting member 1 is exchangeably mounted in sleeve 2, so that, depending on the welding operation and the most favourable profile of the electrodes for such operation, a cutting tool with a suitable profile can be mounted in the sleeve.

The profiling apparatus comprises centring devices 19, 20 for guiding the electrodes as these are being fed to the apparatus. Said centring device incorporates a proximity switch 21 which generates a signal when the electrodes are fed-in, thereby starting the motor 11. Furthermore, the motor can be stopped again by means of this switch when the electrodes leave the apparatus. At the same time, a signal is then generated to open a valve in the compressed-air line 22 for blowing the cutting faces clear. An opening 23 is provided in the cutting member adjacent the bottom 17 for admitting air into the upper portion of the cutting member.

The electrode holders 24 can be moved with the electrodes 25 to the profiling apparatus, after which the electrodes are pressed against the cutting members. It is also possible to move the profiling apparatus to the electrodes. The profiling operation can be effected automatically each time after a predetermined number of welding operations have been carried out.

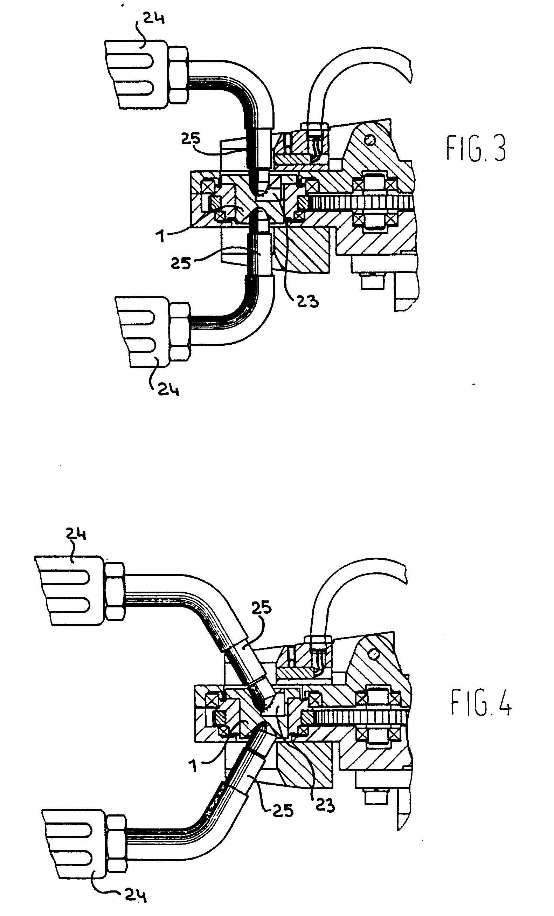

In the embodiment shown in Fig. 3, the ends of the electrodes 25 are in alignment with each other. However, the electrodes may also be at an angle to each other, as shown in Fig. 4. The cutting member, here too, ensures a proper profiling of the ends.

## CLAIMS

1.      An apparatus for profiling the ends of the electrodes of a spot welding device, characterized by cutting members rotatably supported in a housing for machining the end profiles of the electrodes, said cutting members being coupled to a drive motor by means of a transmission mechanism.

2.      An apparatus according to claim 1, characterized in that the housing includes a centring device for guiding the electrodes as these are being fed to the cutting members.

3.      An apparatus according to claim 1 or 2, characterized in that the profiling apparatus includes a switch for starting or switching off the drive motor when the electrodes are fed to, or withdrawn from, the profiling apparatus.

4.      An apparatus according to claims 1-3, characterized in that the switch is coupled to a valve in a compressed-air line for blowing the cutting members clear after the electrodes have been profiled.

5.      An apparatus for spot welding comprising an electrode holder, characterized by a profiling apparatus according to any one of claims 1-4, the arrangement being such that the electrode holder or the profiling apparatus can be moved into a position wherein the ends of the electrodes are in contact with the cutting members of the profiling apparatus.

6.      An apparatus according to claim 5, characterized by a switch mechanism bringing the electrodes into contact with the cutting members of the profiling apparatus after a predetermined number of welding operations have been carried out.

0171113

1/2

FIG.1

FIG.2

FIG.3

FIG.4

European Patent
Office

**EUROPEAN SEARCH REPORT**

Application number

EP 85 20 1191

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-U-1 949 302 (H. FRICKE) * complete document * | 1,3,5 | B 23 K 11/36 |
| X | US-A-3 128 672 (N.E. O'CONNOR et al.) * complete document * | 1-3 | |
| A | | 5 | |
| X | US-A-2 503 382 (S. FISHER) * columns 8,9; figures * | 1,3,5, 6 | |

TECHNICAL FIELDS
SEARCHED (Int. Cl.4)

B 23 K 11/00

The present search report has been drawn up for all claims

| Place of search | Date of completion of the search | Examiner |
|---|---|---|
| BERLIN | 07-10-1985 | WUNDERLICH J E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03 82